# FASCICULE DE BREVET EUROPEEN

(11) **EP 1 427 949 B1**
(45) Date de publication et mention de la délivrance du brevet: **09.02.2005**
(21) Numéro de dépôt: 02774908.4
(22) Date de dépôt: 06.09.2002
(51) Int. Cl.: F16D 65/20, F16D 65/56

(54) **FREIN A DISQUE A ACTIONNEMENT MECANIQUE ET HYDRAULIQUE.**
SCHEIBENBREMSE MIT MECHANISCHER UND HYDRAULISCHER BETÄTIGUNGSVORRICHTUNG
MECHANICALLY AND HYDRAULICALLY ACTUATED DISC BRAKE

(30) Priorité: 10.09.2001 FR 0111757
(43) Date de publication de la demande: 16.06.2004
(73) Titulaire: ROBERT BOSCH GmbH, 70442 Stuttgart (DE)
(72) Inventeur: GERARD, Jean-Louis, F-93170 Bagnolet (FR); LE DEIT, Gérard, F-77181 Courtry (FR)
(74) Mandataire: Hurwic, Aleksander Wiktor
(86) Numéro de dépôt international: PCT/FR2002/003044
(87) Numéro de publication internationale: WO 2003/023247

(56) Documents cités:
- WO-A-00/37820
- US-A- 5 060 765
- US-A- 6 053 289

## Description

La présente invention concerne un cylindre de frein à actionnement mécanique et hydraulique pour véhicule automobile comportant une neutralisation de réglage annulaire et un frein à disque comportant un tel cylindre.

On sait que les cylindres de frein à actionnement mécanique et hydraulique sont constitués par un piston déplaçable en translation sous l'effet de la pression d'un fluide hydraulique ou d'une combinaison de pièces mobiles.

Le fluide hydraulique est injecté sous pression dans le cylindre de frein et agit sur le piston lors d'une commande de frein de roulement, tandis que les pièces mobiles sont mises en mouvement lorsque le conducteur du véhicule actionne le frein de parking.

Dans la plupart des véhicules, l'actionnement du frein de parking se matérialise par la traction d'un câble relié à un levier pivotant monté sur le cylindre de frein. Un mécanisme de rampes à billes est alors prévu dans le cylindre pour transformer les mouvements de rotation du levier en mouvements de translation à transmettre au piston.

Les cylindres de frein utilisant des rampes à billes comportent donc un arbre dépassant à l'extérieur du cylindre, sur lequel est monté le levier actionnable par traction du câble. Cet arbre est solidaire d'un plateau tournant qui coopère avec un plateau mobile en translation avec interposition de billes logées dans des rampes réalisées dans les deux plateaux, de manière que toute rotation du plateau tournant se traduise par une translation du plateau mobile, lequel pousse une entretoise s'étendant jusqu'au piston pour transmettre à ce dernier le mouvement de translation du plateau mobile.

Le piston passe ainsi, par une translation dont la course est égale à celle du plateau mobile, d'une position de repos, laissée par un freinage antérieur, dans laquelle les plaquettes sont quasiment au contact du disque mais non serrées contre ce dernier, à une position de freinage dans laquelle les plaquettes sont serrées contre le disque.

Du fait de l'usure des plaquettes, la position de repos du piston se rapproche du disque dans une mesure non négligeable par rapport à la course de translation. Il est donc nécessaire d'allonger l'entretoise pour que celle-ci reste adaptée à la distance séparant le piston au repos du plateau mobile.

A cet effet, il est connu d'utiliser une entretoise réglable, constituée par une vis et un écrou vissés l'un dans l'autre et pouvant se dévisser pour que la tête de la vis s'éloigne de l'écrou, allongeant ainsi la longueur de l'entretoise.

Ce réglage, pour être efficace, doit s'effectuer automatiquement dans le cylindre de frein à mesure que les garnitures de friction s'usent.

A cet effet, la vis est liée au piston dans ses mouvements de translation tandis que l'écrou est retenu en translation par un ressort. Par conséquent, le déplacement du piston lors des commandes hydrauliques du frein tend à écarter la vis de l'écrou, ce qui provoque son dévissage et, par conséquent, l'allongement de l'entretoise.

Le document WO 0 037 820 décrit sensiblement un tel cylindre de frein.

Ce système donne satisfaction mais doit présenter deux caractéristiques supplémentaires qui vont maintenant être décrites.

Tout d'abord, il est impératif que la vis ne puisse pas se revisser dans l'écrou, notamment au moment de l'actionnement mécanique du frein, où l'entretoise est comprimée entre le plateau mobile et le piston. C'est pourquoi, alors que l'écrou est en permanence bloqué en rotation, la vis est liée au piston par un embrayage conique présentant un léger jeu axial. Lorsque l'embrayage conique est en appui, c'est-à-dire lorsque l'entretoise est comprimée contre le piston par le plateau mobile, le piston immobilise la vis en rotation. En revanche, dès que cet embrayage conique n'est plus en appui grâce à son jeu axial, la vis peut librement tourner autour de son axe.

Ainsi, la vis peut se dévisser de l'écrou au moment du freinage hydraulique pour accroître la longueur de l'entretoise, mais elle ne peut pas se visser dans l'écrou au moment du freinage mécanique afin que l'entretoise demeure à sa longueur précédemment réglée.

La seconde caractéristique indispensable du système est qu'il faut éviter que le réglage automatique de l'entretoise ne se traduise par un blocage du piston en position de freinage serré, ce qui pourrait se produire si l'entretoise s'allongeait systématiquement de la longueur totale de déplacement du piston.

A cet effet, une partie d'extrémité de la vis est montée coulissante dans le piston avec interposition d'un joint qui soustrait ladite partie d'extrémité de la vis pénétrant dans le piston à la pression hydraulique du fluide. Cette partie comporte une section transversale désignée section de neutralisation, grâce à laquelle le fluide sous pression imprime à la vis une force résultante tendant à la pousser contre le piston et donc à mettre l'embrayage conique en appui, c'est-à-dire à immobiliser la vis en rotation et empêcher le réglage de l'entretoise. Cette force résultante est antagoniste à celle exercée par le ressort retenant l'écrou en translation et un tarage de ce ressort permet de fixer la pression limite à partir de laquelle la force résultant de la pression du fluide hydraulique vainc l'action du ressort et stoppe le réglage de l'entretoise. L'entretoise suit alors les mouvements du piston sans s'allonger.

En pratique, on tare le ressort à une valeur la plus élevée possible, sachant que la force résultante limite est généralement d'environ 700 Newtons, compte-tenu de la taille de la section de neutralisation et de la pression du fluide au moment du freinage.

Par conséquent, le ressort retenant l'écrou doit avoir une raideur suffisante pour résister à une force résultante de 700 Newtons.

Les inventeurs à la base de la présente invention ont identifié que la nécessaire solidité de ce ressort est un obstacle à une réduction de volume du cylindre de frein, en raison de la difficulté de compacter les différentes pièces, et notamment ledit ressort.

La présente invention vise à résoudre cette difficulté en proposant un cylindre de frein à actionnement mécanique et hydraulique, formant une chambre étanche pouvant contenir un fluide hydraulique sous pression et comprenant un piston mobile en translation, un poussoir déplaçable en direction du piston lors d'un actionnement mécanique du frein, une entretoise intercalée entre le piston et le poussoir, constituée par deux éléments vissés l'un dans l'autre et aptes à se dévisser pour accroître la longueur de l'entretoise, chaque élément se trouvant au contact d'une pièce de butée constituée respectivement par le piston et par le poussoir, le premier des éléments d'entretoise et la pièce de butée avec laquelle il se trouve en contact étant conformés de manière à s'embrayer en rotation lorsque ledit élément prend appui contre ladite pièce de butée, le premier élément d'entretoise comportant une partie d'extrémité pénétrant dans un alésage formé dans la pièce de butée, cet alésage étant isolé de la chambre de sorte que ladite partie d'extrémité n'est pas soumise à la pression du fluide contenu par la chambre, d'où il résulte que le fluide sous pression exerce sur ledit premier élément une force axiale dirigée vers la pièce de butée correspondante, caractérisé en ce que le premier élément est traversé par un canal apte à mettre la chambre du cylindre en communication avec l'alésage de la pièce de butée, ce canal étant fermé par un obturateur mobile qui, sous l'action du fluide sous pression présent dans la chambre, prend appui contre le fond de l'alésage en ne transmettant sensiblement pas de force axiale audit premier élément d'entretoise.

Ainsi, grâce à l'invention, l'action du fluide hydraulique sous pression sur le premier élément ne s'exerce que sur la section dudit premier élément dans sa partie d'extrémité, déduction faite de la section du canal qui, grâce à l'obturateur mobile, n'est pas soumise à la pression du fluide hydraulique.

En d'autres termes, la section de neutralisation du premier élément est la section transversale annulaire du premier élément située autour dudit canal.

On comprend qu'ayant réduit la section de neutralisation, on réduit en conséquence la force exercée par le fluide sur le premier élément. Le ressort retenant le deuxième élément et permettant le réglage de l'entretoise jusqu'à une pression limite du fluide hydraulique doit donc présenter une raideur réduite proportionnellement à la diminution de la section de neutralisation.

En pratique, alors que la force résultante limite est d'environ 700 Newtons, la force résultante limite du cylindre selon l'invention n'est que d'environ 300 Newtons.

Le ressort de retenue du deuxième élément peut donc être très notablement réduit tout en remplissant sa fonction.

Dans un mode de réalisation particulier de l'invention, le poussoir déplaçable est un mécanisme de rampe à billes comprenant un plateau d'entrée pivotant et un plateau mobile, séparés par des billes logées dans des rampes réalisées dans les deux plateaux.

Selon un premier mode de réalisation de l'invention, le premier élément d'entretoise est un écrou dont l'alésage taraudé constitue le canal et, de préférence, la pièce de butée du premier élément est le piston.

Selon un deuxième mode de réalisation, le premier élément d'entretoise est une vis dont la tête est percée du canal, lequel débouche latéralement dans le corps de ladite vis.

L'obturateur mobile peut, selon l'invention, être un insert coulissant comportant un corps cylindrique qui occupe le canal mettant la chambre du cylindre en communication avec l'alésage de la pièce de butée.

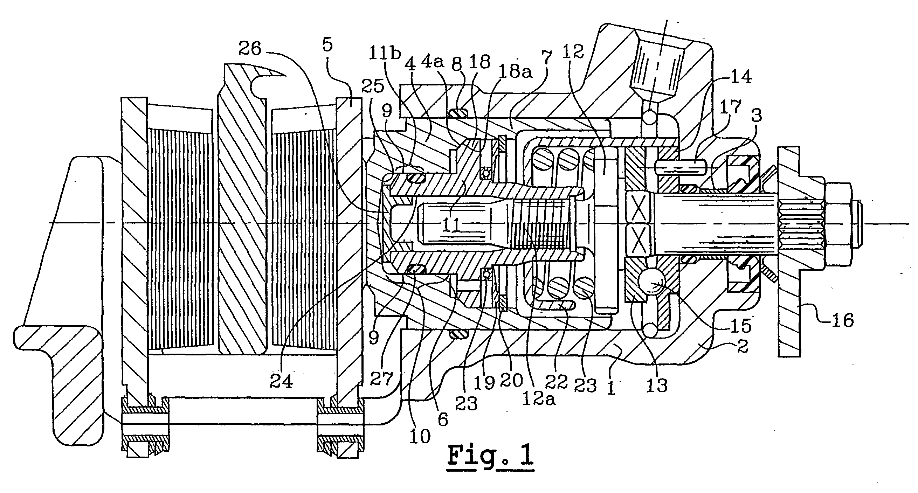

Afin de faciliter la compréhension de l'invention, on va maintenant en décrire un mode de réalisation donné à titre d'exemple non limitatif, à l'aide de la figure unique annexée qui est une vue en coupe axiale d'un cylindre de frein selon un mode de réalisation de l'invention.

Dans le mode de réalisation décrit, le cylindre de frein comprend un corps 1 de forme sensiblement cylindrique, muni d'une première extrémité partiellement obturée par une paroi 2 ne laissant qu'un passage axial 3 et d'une seconde extrémité ouverte sur toute sa section intérieure, laquelle demeure constante depuis ladite seconde extrémité du corps jusqu'à environ la moitié de sa longueur et délimite une chambre cylindrique dans laquelle coulisse un piston 4 de forme extérieure correspondante.

Le piston 4 comporte, à l'opposé de sa face extérieure d'appui contre une plaque-support de plaquette 5, d'une part un fond 6 globalement plan et d'autre part une jupe périphérique 7 qui définit la forme extérieure cylindrique du piston et délimite un espace intérieur audit piston, ouvert en direction de la première extrémité du corps.

Un joint d'étanchéité 8 logé dans une gorge annulaire intérieure de la chambre cylindrique du corps recevant le piston, assure l'étanchéité entre le piston et ladite chambre cylindrique.

Un alésage axial 9 est réalisé dans le piston, à partir de son fond 6 en direction de la plaque-support. Cet alésage 9 libère l'espace nécessaire au coulissement axial de l'extrémité 10 d'un premier élément d'entretoise 11 qui s'étend axialement dans le corps, en étant vissé avec un second élément d'entretoise 12 pour former une entretoise réglable aboutissant à un système de rampes à billes comprenant un plateau d'entrée 13 et un plateau mobile 14 séparés par des billes 15 logées dans des gorges à rampes, comme cela est connu.

Le premier élément d'entretoise 11 est un écrou qui s'étend axialement d'une part jusqu'à l'intérieur de l'alésage 9, d'autre part en direction de la paroi 2 du corps 1. Cet écrou se visse sur le corps fileté 12a d'une vis fixe en rotation mais libre en translation constituant le second élément d'entretoise 12.

Le plateau d'entrée 13 comporte un prolongement qui traverse le passage 3 et fait saillie à l'extérieur du corps, où un levier 16 de commande de frein de parc, monté sur ledit prolongement, est relié à un câble (non représenté) aboutissant à un organe d'actionnement (non représenté), tel qu'un levier à main ou une pédale, logé dans l'habitacle du véhicule.

Le plateau mobile 14 est maintenu en rotation par rapport au corps par un ergot 17.

Le premier élément d'entretoise 11 comporte une collerette 18, située au voisinage du fond 6 du piston et constituant un épaulement qui limite le déplacement axial dudit premier élément en direction dudit piston.

Cette collerette 18 présente une partie tronconique 18a dirigée vers le piston 4 tandis que ledit piston 4 comporte un siège tronconique 4a de forme complémentaire. Ces deux surfaces tronconiques correspondantes constituent un embrayage conique qui, lorsque lesdites surfaces tronconiques s'appuient l'une contre l'autre, assure la solidarisation en rotation du premier élément d'entretoise par rapport au piston.

En d'autres termes, le piston étant immobilisé en rotation par la plaque-support 5, lorsque la collerette 18 s'appuie axialement contre le piston 4, le premier élément d'entretoise 11 est immobilisé en rotation.

La collerette 18 est soumise à l'action d'une rondelle élastique 19, retenue par un circlip 20 dans la jupe périphérique 7 du piston. La rondelle 19 tend à plaquer ladite collerette 18 contre le siège tronconique 4a du piston, un roulement à billes 21 étant interposé entre la collerette 18 et la rondelle 19 afin que le premier élément 11 ne soit pas empêché de tourner autour de son axe longitudinal par ladite rondelle élastique 19.

Une cage où cloche 22 enferme le système de rampes à billes, à savoir le plateau d'entrée 13, les billes 15 et le plateau mobile 14, ainsi qu'une partie du second élément d'entretoise 12 opposée au piston.

Un ressort hélicoïdal 23 assurant la rétention du second élément 12 contre le système de rampes à billes est également enfermé dans la cage 22.

En l'absence de forces hydrauliques, la rondelle élastique 19 plaque la collerette 18 contre le siège 4a et le premier élément 11 est immobilisé en rotation par l'embrayage conique, tandis que le ressort hélicoïdal 23 maintient le second élément 12 contre le système de rampes à billes.

Un canal cylindrique 24 est ménagé dans l'extrémité 10 du premier élément 11 et débouche, en direction du piston, en regard du fond 25 de l'alésage 9.

Le canal 24 est constitué par l'alésage longitudinal de l'écrou et se prolonge par conséquent sur toute la longueur de celui-ci. Il se trouve en équilibre de pression hydraulique avec l'intérieur du cylindre.

Un obturateur coulissant 26 est placé à l'embouchure du canal cylindrique 24, et assure l'obturation étanche de ce dernier, de sorte que le fluide hydraulique présent dans le cylindre remplit le canal mais ne peut pas s'en échapper.

L'obturateur présente une forme de révolution en coupelle propice au maintien d'une bonne étanchéité vis-à-vis du fluide hydraulique, même si ce dernier est soumis à une pression élevée, car sous l'effet de cette pression, la périphérie dudit obturateur se plaque contre la paroi latérale du canal.

En revanche, tout en s'opposant aux fuites de fluide hydraulique, l'obturateur 26 est à même de coulisser dans l'embouchure du canal, sur une course déterminée par la distance axiale entre le fond 25 de l'alésage 9 et la paroi frontale du premier élément 11.

Ainsi, en cas de pression élevée du fluide hydraulique, l'obturateur 26 coulisse en direction du piston jusqu'à arriver en butée contre le fond 25.

Le premier élément d'entretoise 11 ne subit donc aucune force axiale de la part de l'obturateur, en dépit de l'éventuelle pression élevée du fluide hydraulique.

Un autre joint d'étanchéité 27 est logé dans une gorge annulaire de l'extrémité 10 du premier élément 11 pénétrant dans l'alésage 9. Ce joint 27 a pour effet d'isoler la portion terminale 11b du premier élément par rapport à l'intérieur du cylindre, de sorte que la pression du fluide hydraulique régnant dans le cylindre ne s'applique pas à la portion terminale 11b du premier élément 11.

Il en résulte que la pression du fluide hydraulique sur le premier élément d'entretoise engendre une force résultante sensiblement égale au produit de la pression du fluide par la surface de la section annulaire dudit premier élément au droit du joint 27.

Cette surface est la section de neutralisation du premier élément 11 et correspond à la surface de la section pleine de la tête de la vis diminuée de la section du canal 24.

Le fonctionnement du mécanisme de frein va maintenant être décrit.

Ce mécanisme peut être actionné hydrauliquement, ce qui correspond à la commande par la pédale de frein du véhicule, et mécaniquement, ce qui correspond à la commande par le levier de frein de parking.

En fonctionnement hydraulique, le fluide hydraulique présent à l'intérieur du corps 1 du cylindre est mis sous pression.

Cette pression a pour premier effet de repousser le piston 4 vers l'extérieur du corps (vers la gauche sur la figure).

Le déplacement du piston comprime la rondelle élastique 19, et, par conséquent, entraîne le premier élément 11 dans le sens de déplacement du piston, en l'éloignant du second élément 12.

Les deux éléments d'entretoise tendent donc à se dévisser pour allonger l'entretoise.

Cependant, le premier élément 11 est soumis par le fluide sous pression à une force résultante (déjà décrite), qui plaque sa collerette 18 contre le siège 4a du piston, tandis que le ressort hélicoïdal 23 exerce, sur le second élément 12, une force dirigée vers l'extrémité 2 du corps.

Le premier élément 11 est donc soumis à deux groupes de forces antagonistes, à savoir d'une part une force dirigée vers la paroi 2 résultant de l'action du ressort 23, d'autre part la somme des forces dirigées vers le piston 4 résultant de l'action du fluide sous pression et de la rondelle élastique 19.

Pour des pressions de fluide inférieures à une pression seuil définie comme étant la pression qui compense la différence entre l'action du ressort 23 et celle de la rondelle 19, l'embrayage conique se débraye et le premier élément 11 est libre de tourner pour se dévisser et suivre le piston. Le frein se règle.

Pour des pressions de fluide supérieures à cette pression seuil, l'action du ressort 23 demeure trop faible pour vaincre l'action du fluide sur le premier élément 11 et l'embrayage reste collé. Le premier élément ne peut plus tourner et le réglage du frein est inhibé.

En fonctionnement mécanique, le levier de commande 16 imprime une rotation au plateau d'entrée 13.

Ce dernier se met à tourner par rapport au plateau mobile 14, qui est immobilisé en rotation par l'ergot 17.

Les rampes à billes remplissent alors leur fonction d'écartement des deux plateaux.

La collerette 18 s'appuie contre le siège 4a et bloque le premier élément 11 en rotation. L'entretoise peut alors transmettre le mouvement de translation du système de rampes à billes au piston 4.

Il est remarquable, selon l'invention, que, lors d'un freinage hydraulique, la force résultant de l'action du fluide sur le premier élément soit limitée, ce qui permet de recourir à un ressort hélicoïdal moins raide et donc plus compact.

L'invention n'est pas limitée à la description qui précède.

En particulier, rien n'impose que la pièce de butée du premier élément d'entretoise soit le piston, un embrayage conique pouvant aussi bien être réalisé avec l'un des plateaux du système de rampe à billes.

## Revendications

1. Cylindre de frein à actionnement mécanique et hydraulique, formant une chambre étanche pouvant contenir un fluide hydraulique sous pression et comprenant un piston (4) mobile en translation, un poussoir (13, 14, 15) déplaçable en direction du piston lors d'un actionnement mécanique du frein, une entretoise intercalée entre le piston et le poussoir, constituée par deux éléments (11, 12) vissés l'un dans l'autre et aptes à se dévisser pour accroître la longueur de l'entretoise, chaque élément se trouvant au contact d'une pièce de butée constituée respectivement par le piston (4) et par le poussoir, le premier (11) des éléments d'entretoise et la pièce de butée (4) avec laquelle il se trouve en contact étant conformés de manière à s'embrayer en rotation lorsque ledit élément prend appui contre ladite pièce de butée, le premier élément d'entretoise comportant une partie d'extrémité (10) pénétrant dans un alésage (9) formé dans la pièce de butée (4), cet alésage étant isolé de la chambre de sorte que ladite partie d'extrémité n'est pas soumise à la pression du fluide contenu par la chambre, d'où il résulte que le fluide sous pression exerce sur ledit premier élément une force axiale dirigée vers la pièce de butée correspondante,
**caractérisé en ce que** le premier élément est traversé par un canal (24) apte à mettre la chambre du cylindre en communication avec l'alésage (9) de la pièce de butée, ce canal étant fermé par un obturateur mobile (26) qui, sous l'action du fluide sous pression présent dans la chambre, prend appui contre le fond (25) de l'alésage en ne transmettant sensiblement pas de force axiale audit premier élément d'entretoise.

2. Cylindre de frein selon la revendication 1, **caractérisé en que** le poussoir déplaçable est un mécanisme de rampe à billes comprenant un plateau d'entrée (13) pivotant et un plateau mobile (14), séparés par des billes (15) logées dans des rampes réalisées dans les deux plateaux.

3. Cylindre de frein selon l'une quelconque des revendications 1 et 2, **caractérisé en ce que** le premier élément d'entretoise (11) est un écrou dont l'alésage taraudé constitue le canal (24).

4. Cylindre de frein selon l'une quelconque des revendications 1 à 3, **caractérisé en ce que** la pièce de butée (4) du premier élément (11) est le piston.

5. Cylindre de frein selon l'une quelconque des revendications 1 à 4, **caractérisé en ce que** l'obturateur mobile (26) est un insert coulissant comportant un corps cylindrique qui occupe le canal (24) mettant la chambre du cylindre en communication avec l'alésage de la pièce de butée.

## Patentansprüche

1. Bremszylinder mit mechanischer und hydraulischer Betätigung, der eine dichte Kammer bildet, die eine unter Druck stehende Hydraulikflüssigkeit enthalten kann und einen translatorisch bewegbaren Kolben (4) aufweist, einen Stößel (13, 14, 15), der bei einer mechanischen Betätigung der Bremse in Richtung des Kolbens verlagert werden kann, ein Zwischenteil, das zwischen dem Kolben und dem Stößel eingesetzt ist und aus zwei Elementen (11, 12) besteht, die ineinander geschraubt und auseinanderschraubbar sind, um die Länge des Zwischenteils zu vergrößern, wobei jedes Element ein Anschlagstück berührt, das aus dem Kolben (4) bzw. dem Stößel besteht, wobei das erste (11) der Zwischenteilelemente und das Anschlagstück (4), das es berührt, so ausgebildet sind, dass sie drehend ineinander eingreifen, wenn sich das Element gegen das Anschlagstück stützt, wobei das erste Zwischenteilelement einen Endabschnitt (10) aufweist, der in eine in dem Anschlagstück (4) ausgebildete Bohrung (9) eindringt, wobei diese Bohrung von der Kammer isoliert ist, so dass der Endabschnitt dem Druck der in der Kammer enthaltenen Flüssigkeit nicht ausgesetzt ist und daher die unter Druck stehende Flüssigkeit auf das erste Element eine axiale Kraft ausübt, die zum entsprechenden Anschlagstück ausgerichtet ist,
**dadurch gekennzeichnet, dass** das erste Element von einem Kanal (24) durchquert ist, der die Kammer des Zylinders mit der Bohrung (9) des Anschlagstücks verbinden kann, wobei dieser Kanal durch einen beweglichen Verschluss (26) verschlossen ist, welcher sich unter der Wirkung der unter Druck stehenden Flüssigkeit, die in der Kammer vorhanden ist, gegen den Boden (25) der Bohrung stützt und dabei dem ersten Zwischenteilelement im Wesentlichen keine axiale Kraft überträgt.

2. Bremszylinder nach Anspruch 1, **dadurch gekennzeichnet, dass** der verstellbare Stößel ein Rampenmechanismus mit Kugeln ist, der eine schwenkbare Eingangsscheibe (13) und eine bewegliche Scheibe (14) aufweist, die durch Kugeln (15) getrennt sind, welche in Rampen liegen, die in den beiden Scheiben ausgebildet sind.

3. Bremszylinder nach Anspruch 1 oder 2, **dadurch gekennzeichnet, dass** das erste Zwischenteilelement (11) eine Mutter ist, deren Gewindebohrung den Kanal (24) bildet.

4. Bremszylinder nach einem der Ansprüche 1 bis 3, **dadurch gekennzeichnet, dass** das Anschlagstück (4) des ersten Elementes (11) der Kolben ist.

5. Bremszylinder nach einem der Ansprüche 1 bis 4, **dadurch gekennzeichnet, dass** der bewegliche Verschluss (26) ein gleitender Einsatz ist, der einen zylindrischen Körper aufweist, welcher den Kanal (24) einnimmt, der die Kammer des Zylinders mit der Bohrung des Anschlagstücks verbindet.

## Claims

1. Mechanically- and hydraulically actuated brake cylinder defining a tight chamber, capable of containing a pressure hydraulic fluid and housing a translationally-moving piston (4) ; a tappet-forming member (13, 14, 15) which can be moved towards the piston on a mechanical actuation of the brake ; a spacer interposed between the piston and the tappet-forming member and consisting of two elements (11, 12), threaded the one into the other and capable of unscrewing so as to increase the length of the spacer, each element being in contact with a stop-forming part, i.e. the piston (4) and the tappet-forming member respectively, the first one (11) of the spacer-forming elements and the respective stop-forming part (4) with which it cooperates being shaped in such a way that they can come into gear for a rotational motion when said element is bearing on said stop-forming part ; wherein the first spacer-forming element comprises an end portion (10) engaging a bore (9) provided in the stop-forming part (4), such bore being isolated from the chamber so that said end portion is not subjected to the fluid pressure inside the chamber, with the result that the pressure fluid exerts, on said first element, an axial force in the direction of the corresponding stop-forming part,
**characterised in that** a channel (24) is provided through the first element, so as to connect the cylinder chamber with the bore (9) in the stop-forming part, said channel being closed by a moving shutter (26) which, under the action of the pressure fluid within the chamber, bears on the end wall (25) of the bore while imparting substantially no axial force to said first spacer-forming element.

2. Brake cylinder according to claim 1, **characterised in that** the movable tappet-forming member is a ramp-and-ball mechanism comprising a swivelling input plate (13) and a moving plate (14), between which balls (15) are accommodated inside ramps provided in both plates.

3. Brake cylinder according to claim 1 or claim 2, **characterised in that** the first-spacer forming element (11) is a nut, the threaded hole of which constitutes the channel (24).

4. Brake cylinder according to any one of claims 1 to 3, **characterised in that** the stop-forming part (4) for the first element (11) is the piston.

5. Brake cylinder according to any one of claims 1 to 4, **characterised in that** the moving shutter (26) is a sliding inserted piece comprising a cylindrical body received inside the channel (24) which connects the cylinder chamber with the bore provided in the stop-forming part.
